(19) Europäisches Patentamt / European Patent Office / Office européen des brevets

(11) **EP 2 882 115 A1**

(12) **EUROPEAN PATENT APPLICATION**

(43) Date of publication:
**10.06.2015 Bulletin 2015/24**

(51) Int Cl.:
*H04B 10/079* (2013.01)

(21) Application number: **13306659.7**

(22) Date of filing: **03.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Dupuis, Nicolas**
  **2018 Antwerp (BE)**
• **Meersman, Stijn**
  **2018 Antwerp (BE)**

(74) Representative: **D'Halleweyn, Nele Veerle Trees Gertrudis et al**
**Arnold & Siedsma**
**Bezuidenhoutseweg 57**
**2594 AC The Hague (NL)**

(54) **Method and system of monitoring the power level of optical signals in an optical network**

(57) A method of monitoring the power level of signals in a network comprising the following steps: measuring the signal level at a given end of a wire or fibre at certain time intervals; comparing the measured signal level with signal levels measured at earlier times, wherein one or more statistical estimators are used which are adapted in time on basis of the track record of the signal.

FIG. 1

**Description**

More and more information is sent through wire line or optical fibre to an end user; such physical link is very important for the quality of service (QoS). Video-On-Demand, IP television as well as Triple-play services (telephony, internet and television) all require a high quality of service.

A typical Passive Optical Network (PON) uses Time Division Multiplexing (TDM) using one wavelength for downstream traffic and Time Division Multiple Access (TDMA) on another wavelength for upstream traffic on a fibre according to a standard of ITU-T.

A PON consists of a central optical node called an Optical Line Terminal (OLT), one or more user nodes, called Optical Network Units (ONUs) or Optical Network Terminals (ONTs), and the fibres and splitters between them, called the Optical Distribution Network (ODN). "ONT" is an ITU-T term to describe a single-tenant ONU. An OLT provides the interface between a PON and a service provider's core network which typically include IP traffic over fast internet (10 gigabit), standard TDM interfaces and ATM UNI at 155-622 Mbit/s. These services can include voice (plain old telephone service (POTS)), or voice-over-IP (VoIP), (other) data and video.

It is important to detect, discriminate and localize different types of problems occurring in PON communication such as a fibre bend, a pressured fibre or any impairments that affect the level of optical power received at the ONT or OLT.

Existing methods compare an optical signal level at a time t with respect to previous values, at time t-1, t-2, etc.

As a current optical value may vary over time the reliability of this solution is low, while the amount of false alarm is inacceptable.

Preferred embodiments of the present patent application have for its object to improve upon the existing methods and apparatus especially with respect to end confidence. The present invention provides a method of monitoring the power level of signals preferably in an network comprising the following steps: measuring the signal level at a downstream and upstream end of a fibre or wire at certain time intervals; comparing the measured signal level with optical signal levels measured at earlier times, wherein statistical estimators are used which are adapted in time on basis of the track record of the signal. Preferably the signals and network are optical.

Using statistical estimators which rely on adaptive filtering/tracking of the optical signal, for instance using weighted moving average or (normalized) least mean square method in order to update in time some statistical estimators like the means, the standard deviations or more elaborated metrics, coming from adaptive filtering, like covariance or autocorrelation, to improve the reliability - so called ONT/OLT bad repeatability is avoided.

In a preferred embodiment the reliability is obtained by measuring a mean and a standard deviation the average value being updated by a smoothing technique, and preferably by a exponential smoothing technique.

Further the present invention also provides a system comprising testing means to detect whether the received sampled signal is degraded relative to unsuspected signal level by establishing the mean $\mu(t-1)$ at an earlier point in time and one or more standard deviations; and self learning means for determining a confidence value (0 <conf <1) by computing one or more stochastical estimations and tracking/updating estimates on basis of which a confidence consolidation and maximum confidence is established.

Further advantages, features and details will be become apparent after reading the following description with reference to the annexed figures which are:

Fig. 1 a diagram of a Passive Optical Network (PON);
Fig. 2 a block diagram of an adaptive tracking system according to a preferred embodiment;
Fig. 3 a graph of a measured signal including the values of the mean and the standard deviations;
Fig. 4A another example of a graph of the optical signal;
Fig. 4B a graph of the confidence level for the detection according to fig. 4A; and
Fig. 4C a graph of the sliding maximum confidence value for the detection according to figure 4A; and
Fig. 5A, 5B resp. 5C are another example of graphs of an identification of a fibre impairment of an optical level signal measurement in a noisy environment.

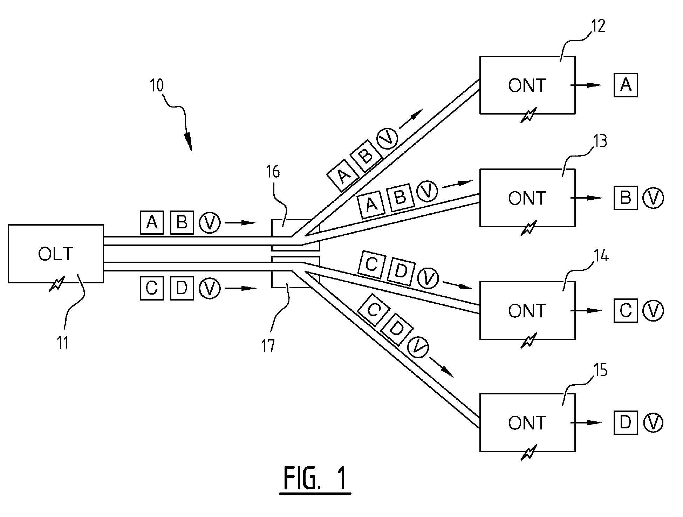

A PON 10 (fig. 1) comprises an OLT 11 and a number of ONTs 12, 13, 14, 15 etc. and two or more splitters 16, 17. A typical distance between the OLT and the ONT can be 20 kilometres. ONT 12 could for instance receive data or voice A, B, C, D and Video (V) for a single customer, e.g. ONT 13 video receiving for multiple customers.

According to the preferred embodiment the optical signal level as received at the ONT side is measured. For tracking analysis and transient detection analysis, a collection of this so-called operational parameter value at regular time interval is performed, e.g. every hour for a given optical link. In another embodiment (not shown) the optical signal level received at the OLT side could also be used, giving substantially the same view of the transmitted power through the PON, but for another wavelength.

As the received optical signal level can be sensitive to external influences, the measurements have been made adaptive. Furthermore the adaptive behaviour, and the related estimations, are continuously updated. Such tracking system will be a practical tool to be used by operators for troubleshooting, setting high reactivity and reliability constraints on the reporting of the detection.

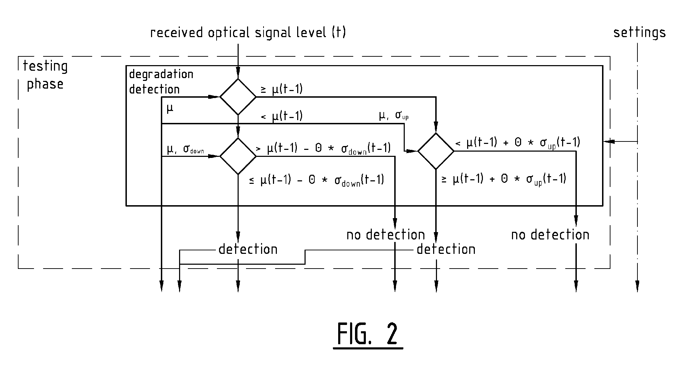

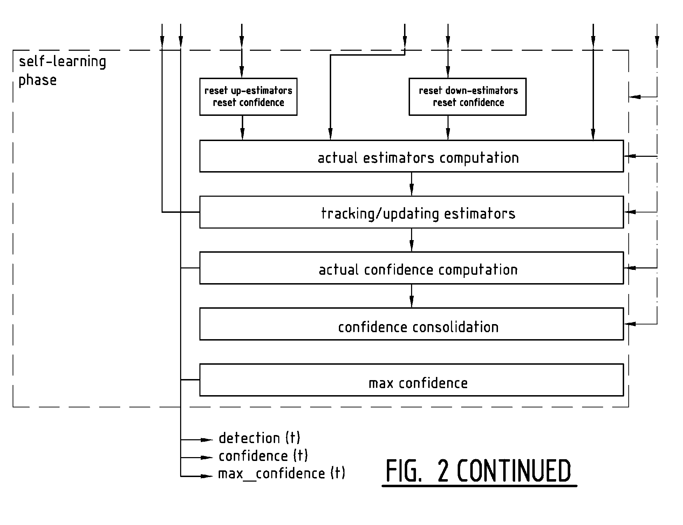

When a new value of optical received power is available, a sample in time (fig. 2), the adaptive tracking system tests if this new sample behaves in accordance with the learning of the system with respect to the previous samples, or that it starts to behave differently. In case the sample looks similar to the previous samples, estimations of the current statistics are consolidated and learning is refined. If the sample does not look similar detection is performed and a new learning phase is triggered (the learning history is cleaned). The confidence to be reported depends therefore on the strength of the deviation as well as on the persistence of it through time.

During the learning phase (meaning that there is an available sample for the optical signal, (Rx power), that is judged as being statistically similar to the previous sample) apart from the average value $\mu(t)$ of the signal which is tracked through time, also the standard deviation $\sigma$ is. In a preferred embodiment, also to limit the computation and not to have to store large amount of values, an exponential smoothing technique is used. Preferably, the standard deviation estimation is updated every sample time with the following rules:

$$(1)$$

$$\mu[t] = (1 - \lambda)\mu[t-1] + \lambda \cdot RxPower[t]$$

$$\sigma^2_{up}[t] = (1 - \lambda)\sigma^2_{up}[t-1] + \lambda \cdot currentDev[t]^2 \quad , if \quad currentDev[t] > 0$$
$$\sigma^2_{down}[t] = (1 - \lambda)\sigma^2_{down}[t-1] + \lambda \cdot currentDev[t]^2 \quad , if \quad currentDev[t] < 0$$

*with*

$$currentDev[t] = RxPower[t] - \mu[t]$$

$$\sigma_{up}[t] = \sqrt{\sigma^2_{up}[t]}$$

$$\sigma_{down}[t] = \sqrt{\sigma^2_{down}[t]}$$

in which $\lambda$ (o < $\lambda$ < 1, e.g. 0.5) is the forgetting factor. As the optical signal level in most cases does not have a symmetrical distribution both an upper standard deviation $\sigma_{up}$ and a lower standard deviation $\sigma_{down}$ are computed which are updated separately.

At the testing phase (fig. 2), during which it is assessed whether if the current sample value for the optical signal level is statistically similar to the previous values - more significant difference in value - an evaluation of the difference in value between the current sample and the tracking average sample is performed. The adaptive thresholds which are used to compare this difference, are computed based on the two standard deviations, according to the following formula:

$$\text{test}[t] = \text{sign}\left(RxPower[t] \geq \mu[t-1] + \Theta \cdot \sigma_{up}[t-1]\right), \qquad (2)$$
$$if\, RxPower[t] \geq \mu[t-1]$$

$$\text{test}[t] = \text{sign}\left(RxPower[t] \leq \mu[t-1] - \Theta \cdot \sigma_{down}[t-1]\right),$$
$$if\, RxPower[t] \leq \mu[t-1]$$

with a typical value $\theta$ = 4,5; $\theta x\sigma$ can also be any other value e.g. any value between 1x$\sigma$ or 8x$\sigma$

It is also possible to use a fixed threshold (e.g. 1 dB) representing a meaningful minimum gap.

If the two conditions are triggered and a positive decision is reached, the learning history is cleaned, so that the tracking average and/or the standard deviations are reset and their estimations are reinitialized since that sample - see also fig. 2.

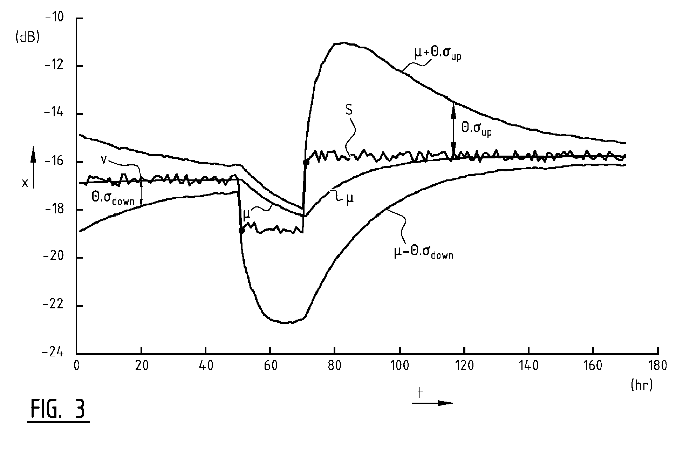

The signal S together with an average line $\mu$ and the upper and lower standard deviations which after two jumps in the signal level converge again to an average, are shown in fig. 3.

In a preferred embodiment a dynamic confidence (conf) is also computed. The confidence has a scale between 0 and 1 and gives a value to the reliability (significant and sustainable) and the nature of the detection. The computation is proportional to the distance between the value difference between the current signal level value and the tracking average, modulated by a sigmoid function (S shape) dependent on the standard deviation, moreover consolidated with the future values according to the following formula's 3:

$$\text{conf}[t] = 1/2 \cdot \left[1 + erf\left(\frac{(RxPower[t]-\mu[t]-\Gamma)}{\sqrt{2\sigma_{up}^2[t-1]}}\right)\right] \qquad (3)$$
$$if\ RxPower[t] \geq \mu[t-1]$$

$$\text{conf}[t] = 1/2 \cdot \left[1 - erf\left(\frac{(RxPower[t]-\mu[t]+\Gamma)}{\sqrt{2\sigma_{down}^2[t-1]}}\right)\right]$$
$$if\ RxPower[t] \leq \mu[t-1]$$

$$\text{accConf}[t] = (1-2\ \lambda) \cdot accConf[t-1] + 2 \cdot \lambda \cdot conf[t]$$
$$\text{conf}[t+N] = \left(1 - e^{-(1-2\lambda)\cdot N}\right) \cdot accConf[t]$$

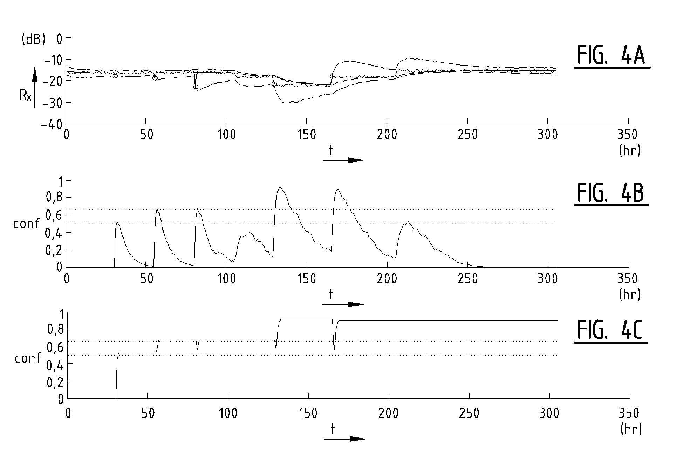

where $\Gamma$ is a fixed threshold (e.g. 1 dB) and N the period between the detection and the current time sample. An identification of the maximum of the confidence per triggered detection gives the maximum expectation for the occurrence of the fibre degradation. An example of such metric computation - see figure 4A wherein again a noisy signal the average and the upper and lower deviations are shown while figure 4B shows the related confidence evolution, while figure 4C shows the increasing maximum confidence value for each detection over time, so that after about 100 hours it is almost certain that here is a fibre impairment.

As also illustrated in figure 2 there is a testing phase where a degradation is detected by comparing the received signal level to a threshold based on $\mu$ (t-1) and the upper standard deviation $\sigma_{up}$ and lower standard deviation $\sigma_{down}$ (depending on whether there is an increase or decrease in received signal level). If a degradation is detected, the estimators are reset as well as the confidence and the actual estimator computations starts. If no degradation is detected, also the actual estimators are computed in the self-learning phase.

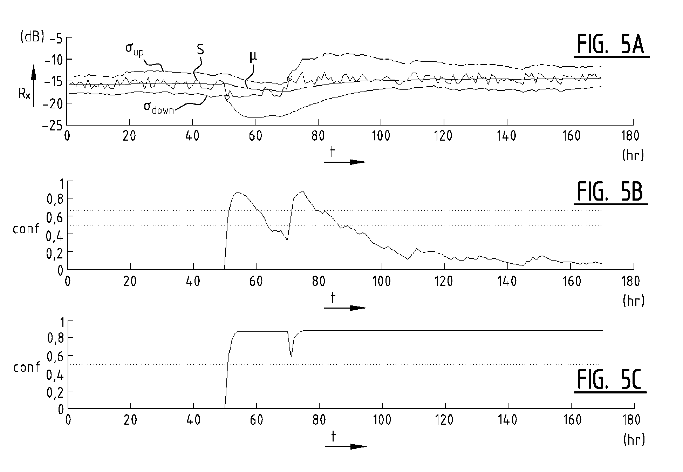

In case of a noisy signal (fig. 5A, 5B, 5C) the standard deviations $\sigma_{up}$ and $\sigma_{down}$ have relatively high values, so that the conf value becomes high after about 50 hours. Due to the forgetting capability of the presence of the fault there is a dip in the conf. value thereafter. This value again increases after a sudden increase in power (probably a fault recovery). Fig. 5C clips the value of max conf. value e.g. for fault reporting purposes.

The present invention is not limited to the present embodiments. The scope of protection is established by the content of the following claims within the scope of which many variations are feasible.

## Claims

1. A method of monitoring the power level of signals in a network comprising thefollowing steps:

    measuring the signal level at a given end of a wire or fibre at certain time intervals;
    comparing the measured signal level with signal levels measured at earlier times,

    wherein one or more statistical estimators are used which are adapted in time on basis of the track record of the signal.

2. The method wherein the signal according to claim 1 is an optical signal in a PON.

3. The method according to claim 1 or 2, wherein the adaptive estimator makes use of a weighted moving average, a (normalized) least means square in order to update in time some statistical estimators like the means, the standard deviations for characterizing the signal used as input in order to obtain information about significant deviations from its most likely behaviour.

4. The method according to claim 1 or 2 wherein both the average value of the optical signal as well as the standard deviation are used in the estimation.

5. The method according to claim 3 wherein the average failure of the signal is updated by an exponential smoothing technique.

6. The method according to claim 4, wherein the exponential smoothing technique uses the following formula;

$$\mu[t] = (1 - \lambda)\mu[t - 1] + \lambda \cdot RxPower[t]$$

$$\sigma_{up}^2[t] = (1 - \lambda)\sigma_{up}^2[t - 1] + \lambda \cdot currentDev[t]^2 \quad ,if \quad currentDev[t] > 0$$
$$\sigma_{down}^2[t] = (1 - \lambda)\sigma_{down}^2[t - 1] + \lambda \cdot currentDev[t]^2 \quad ,if \quad currentDev[t] < 0$$

with

$$currentDev[t] = RxPower[t] - \mu[t]$$

$$\sigma_{up}[t] = \sqrt{\sigma_{up}^2[t]}$$

$$\sigma_{down}[t] = \sqrt{\sigma_{down}^2[t]}$$

7. The method according to claim 5, wherein an evaluation of the difference in value between the current sample value and the tracking average value is performed wherein the difference is compared to one or more adaptive thresholds.

8. The method according to the previous claims, wherein a dynamic confidence is computed about the reliability in the nature of the detection.

9. The method according to the previous claims, wherein the difference between the current signal level and the tracking average is modulated by a sigmoid function dependent on the standard deviation values.

10. A system establishing whether or not a certain received signal sample is reliable or not, comprising:

testing means to detect whether the received sampled signal is degraded relative to unsuspected signal level by establishing the mean M t-1 at an earlier point in time and one or more standard deviations; and
self learning means for determining a confidence value (0 <conf <1) by computing one or more stochastical estimations and tracking/updating estimates on basis of which a confidence consolidation and maximum confidence is established.

11. The system according to claim 10, comprising means configured to execute the method steps of any of claims 1-9.

FIG. 1

received optical signal level (t)                                              settings

$$\underline{\text{FIG. 2}}$$

FIG. 2 CONTINUED

FIG. 3

FIG. 4A

FIG. 4B

FIG. 4C

FIG. 5A

FIG. 5B

FIG. 5C

Europäisches
Patentamt

European
Patent Office

Office européen
des brevets

**EUROPEAN SEARCH REPORT**

Application Number

EP 13 30 6659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/269053 A1 (YANG SULIN [CN]) 29 October 2009 (2009-10-29) | 1-4 | INV. H04B10/079 |
| A | * figure 1 * <br> * paragraph [0030] * <br> * paragraph [0033] * <br> * paragraph [0035] * <br> * paragraph [0037] * <br> * paragraphs [0039] - [0040] * | 5-11 | |
| X | US 2010/098413 A1 (LI WEIDONG RICK [US] ET AL) 22 April 2010 (2010-04-22) | 1-4 | |
| A | * figure 2 * <br> * paragraph [0003] * <br> * paragraph [0085] * | 5-11 | |
| A | EP 2 579 480 A1 (ALCATEL LUCENT [FR]) 10 April 2013 (2013-04-10) <br> * paragraph [0002] * <br> * paragraph [0011] * <br> * paragraph [0019] * <br> * paragraph [0028] * <br> * paragraph [0034] * <br> * paragraphs [0038] - [0045] * <br> * figures 1,4 * | 1-11 | TECHNICAL FIELDS SEARCHED (IPC) H04B H04L |

The present search report has been drawn up for all claims

| Place of search | Date of completion of the search | Examiner |
|---|---|---|
| Munich | 2 May 2014 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 882 115 A1

**ANNEX TO THE EUROPEAN SEARCH REPORT
ON EUROPEAN PATENT APPLICATION NO.**    EP 13 30 6659

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2014

| Patent document cited in search report | Publication date | Patent family member(s) | | Publication date |
|---|---|---|---|---|
| US 2009269053 A1 | 29-10-2009 | CN | 101296034 A | 29-10-2008 |
| | | EP | 2144382 A1 | 13-01-2010 |
| | | US | 2009269053 A1 | 29-10-2009 |
| | | WO | 2008131690 A1 | 06-11-2008 |
| US 2010098413 A1 | 22-04-2010 | CN | 102204128 A | 28-09-2011 |
| | | EP | 2353230 A2 | 10-08-2011 |
| | | TW | 201031140 A | 16-08-2010 |
| | | US | 2010098413 A1 | 22-04-2010 |
| | | US | 2013251362 A1 | 26-09-2013 |
| | | WO | 2010048034 A2 | 29-04-2010 |
| EP 2579480 A1 | 10-04-2013 | EP | 2579480 A1 | 10-04-2013 |
| | | WO | 2013045291 A1 | 04-04-2013 |

EPO FORM P0459

For more details about this annex : see Official Journal of the European Patent Office, No. 12/82